# EUROPÄISCHE PATENTSCHRIFT

(11) **EP 3 610 281 B1**
(45) Veröffentlichungstag und Bekanntmachung des Hinweises auf die Patenterteilung: **10.03.2021**
(21) Anmeldenummer: 18701457.6
(22) Anmeldetag: 23.01.2018
(51) Int. Cl.: G01S 5/02, G01S 5/14, G01B 7/00, G01S 11/06, G07C 9/00

(54) **VERFAHREN, COMPUTERLESBARES MEDIUM, SYSTEM, UND FAHRZEUG UMFASSEND DAS SYSTEM ZUM ERMITTELN EINES AUFENTHALTSBEREICHS EINES MOBILEN ENDGERÄTS RELATIV ZU DEM FAHRZEUG**
METHOD, COMPUTER-READABLE MEDIUM, SYSTEM, AND VEHICLE COMPRISING THE SYSTEM FOR ASCERTAINING A PLACEMENT REGION OF A MOBILE TERMINAL RELATIVE TO THE VEHICLE
PROCÉDÉ, SUPPORT LISIBLE PAR ORDINATEUR, SYSTÈME ET VÉHICULE COMPORTANT LE SYSTÈME PERMETTANT DE DÉTERMINER UNE RÉGION OÙ SE TROUVE UN TERMINAL MOBILE PAR RAPPORT AU VÉHICULE

(30) Priorität: 10.04.2017 DE 102017206119
(43) Veröffentlichungstag der Anmeldung: 19.02.2020
(73) Patentinhaber: Bayerische Motoren Werke Aktiengesellschaft, 80809 München (DE)
(72) Erfinder: KNOBLOCH, Daniel, 80993 München (DE)
(86) Internationale Anmeldenummer: PCT/EP2018/051551
(87) Internationale Veröffentlichungsnummer: WO 2018/188824

(56) Entgegenhaltungen:
- DE-A1-102015 211 833
- DE-T5-112015 002 999
- US-A1- 2014 156 180

## Beschreibung

Die Erfindung betrifft ein Verfahren zum Ermitteln eines Aufenthaltsbereichs eines mobilen Endgeräts relativ zu einem Fahrzeug. Die Erfindung betrifft ferner ein computerlesbares Medium, ein System, und ein Fahrzeug umfassend das System zum Ermitteln eines Aufenthaltsbereichs eines mobilen Endgeräts relativ zu dem Fahrzeug.

Mobile Geräte können dazu verwendet werden, verschiedene Funktionen eines Fahrzeugs zu steuern. Hierfür ist es häufig notwendig, eine Position des mobilen Geräts zu bestimmen. Um eine Position eines mobilen Geräts zu bestimmen, sind aus dem Stand der Technik verschiedene Verfahren bekannt. Beispielsweise kann eine einzelne Position des mobilen Geräts mittels einer satellitenbasierten Positionsbestimmung, mittels einer Trilateration oder mittels eines Kalmanfilters ermittelt werden. Diese, aus dem Stand der Technik bekannten Verfahren verwenden eine einzelne, gemessene Position, um die Position des mobilen Geräts zu ermitteln.

DE 10 2015 211833 A1 beschreibt ein Verfahren zum Erzeugen von Referenzdaten für eine Positionsbestimmung von Objekten relativ zu einem Fahrzeug mit Hilfe von Schwerpunkten.

DE 11 2015 002999 T5 offenbart ein Fahrzeugkommunikationssystem, mit dem es selbst dann möglich ist, genau zu bestimmen, ob sich eine portable Einrichtung innerhalb oder außerhalb einer Fahrzeugkabine befindet, wenn einige von mehreren fahrzeugeigenen Antennen defekt sind.

Es ist daher eine Aufgabe der Erfindung, eine Positionsbestimmung eines mobilen Geräts, insbesondere eines mobilen Endgeräts, relativ zu einem Fahrzeug effizient zu verbessern.

Gelöst wird diese Aufgabe durch die Merkmale der unabhängigen Ansprüche. Vorteilhafte Ausgestaltungen und Weiterbildungen der Erfindung ergeben sich aus den abhängigen Ansprüchen.

Gemäß einem ersten Aspekt zeichnet sich die Erfindung aus durch ein Verfahren zum Ermitteln eines Aufenthaltsbereichs eines mobilen Endgeräts relativ zu einem Fahrzeug. Der Aufenthaltsbereich kann eine Region umfassen, in der sich das mobile Endgerät mit einer vorgegebenen Konfidenz bzw. mit einem vorgegebenen Konfidenzwert befindet. Das Ermitteln eines Aufenthaltsbereichs kann ein Bereitstellen des Aufenthaltsbereichs an eine Komponente und/oder eine Funktion des Fahrzeugs umfassen. Das mobile Endgerät kann ein Smart-Device, z.B. ein Smartphone oder eine Smart-Watch, und/oder ein Wearable-Device, z.B. ein Schlüssel, ein Fahrzeugschlüssel, eine Karte, eine Augmented Reality Brille oder allgemein ein Tag, das eine Person bei sich trägt, sein. Das Fahrzeug kann ein Landfahrzeug, z.B. ein Kraftfahrzeug oder ein Motorrad, sein.

Das Verfahren umfasst ein Erzeugen einer Menge von Positionen relativ zu dem Fahrzeug. Eine Position kann ein möglicher Aufenthaltsort des mobilen Endgeräts sein. Die Menge von Positionen kann eine vorgegebene Anzahl an Positionen umfassen. Die vorgegebene Anzahl kann in Anhängigkeit des Fahrzeugs, des mobilen Endgeräts, eines Umfelds des Fahrzeugs, und/oder einer Fahrzeugfunktion variieren. Die Menge von Positionen kann in einem vorzugsweise nahen Umfeld des Fahrzeugs erzeugt werden. Das Umfeld des Fahrzeugs kann durch eine Sende-/Empfangsreichweite einer Drahtlosschnittstelle und/oder durch einen vorgegebenen, fahrzeugspezifischen oder umfeldspezifischen Entfernungsparameter begrenzt sein. Eine Position kann relativ zu dem Fahrzeug und/oder einem oder mehreren Referenzpunkten des Fahrzeugs erzeugt werden. Ein Referenzpunkt kann beispielsweise eine Antenne einer Drahtlosschnittstelle, ein Messpunkt, und/oder ein Position eines Sensors sein. Vorzugsweise umfasst das Fahrzeug mehrere Referenzpunkte.

Das Verfahren umfasst ferner ein Berechnen einer Aufenthaltswahrscheinlichkeit des mobilen Endgeräts für eine Position aus der Menge von Positionen. Vorzugsweise kann das Verfahren die Aufenthaltswahrscheinlichkeit des mobilen Endgeräts für alle Positionen aus der Menge von Positionen berechnen. Weiterhin umfasst das Verfahren ein Zuordnen einer Position aus der Menge von Positionen zu einer Zone aus einer Vielzahl von Zonen des Fahrzeugs. Vorzugsweise kann das Verfahren alle Positionen aus der Menge von Positionen keiner oder genau einer Zone des Fahrzeugs zuordnen. Weist das Verfahren einer Position keine Zone zu, wird diese Position im weiteren Verlauf des Verfahrens nicht weiter betrachtet. Das Zuordnen einer Position zu einer Zone kann dadurch erfolgen, indem eine Position auf eine Zone abgebildet wird.

Eine Zone eines Fahrzeugs kann fahrzeugspezifisch sein. Vorzugsweise umfasst das Fahrzeug mindestens zwei Zonen, vorzugsweise mehr als zwei Zonen, z.B. 3, 4, 5, 6, 7, ... Zonen. Beispielsweise kann eine Zone einen Innenraum eines Fahrzeugs, einen Außenraum für eine Rechte Tür, einen Außenraum für einen linke Tür oder einen Kofferraum umfassen. Eine Zone kann einen frei wählbaren Raum in Innen- oder Außenraum des Fahrzeugs umfassen. Eine Zone eines Fahrzeugs ist vorzugsweise vordefiniert. Mit einer Zone kann eine Funktion eines Fahrzeugs verknüpft sein. Eine Zone kann zweidimensional oder dreidimensional definiert sein.

Eine Zone des Fahrzeugs kann relativ zu dem Fahrzeug definiert sein. Eine Zone des Fahrzeugs kann relativ zu einem oder mehreren Referenzpunkten des Fahrzeugs definiert sein.

Das Verfahren umfasst ferner ein Bestimmen einer aggregierten Aufenthaltswahrscheinlichkeit des mobilen Endgeräts für eine Zone aus der Vielzahl von Zonen in Abhängigkeit der zugeordneten Positionen zu der Zone. Vorzugsweise bestimmt das Verfahren die aggregierte Aufenthaltswahrscheinlichkeit des mobilen Endgeräts für alle Zonen des Fahrzeugs. Falls die aggregierte Aufenthaltswahrscheinlichkeit des mobilen Endgeräts für eine Zone aus der Vielzahl von Zonen einen vorgegebenen Konfidenzwert überschreitet, ermittelt das Verfahren diese Zone als den Aufenthaltsbereich des mobilen Endgeräts. Die Konfidenz bzw. der Konfidenzwert ist vorzugsweise ein Schwellwert, der in Abhängigkeit einer Fahrzeugfunktion und/oder einer Art einer Fahrzeugfunktion festgelegt ist. Der Konfidenzwert kann fahrzeugspezifisch und/oder umfeldspezifisch festgelegt sein. Ein Konfidenzwert von 90% kann beispielsweise bedeuten, dass 90% der Positionen aus der Menge von Positionen einer bestimmten Zone zugeordnet sein müssen, damit diese Zone als der Aufenthaltsbereich des mobilen Geräts ermittelt wird.

Vorteilhafterweise kann ein Aufenthaltsbereich eines mobilen Endgeräts bezüglich einer Zone des Fahrzeugs präziser ermittelt werden ohne einen genauen Aufenthaltsort bzw. eine genaue Position des mobilen Endgeräts zu kennen. Durch das Verwenden einer Menge von Positionen kann eine bessere Zuweisung des mobilen Endgeräts im Grenzbereich von aneinander angrenzender Zonen erreicht werden. Eine fehlerhafte Zuweisung des mobilen Endgeräts zu einer Zone kann somit effizient vermieden werden. Eine Positionsbestimmung des mobilen Endgeräts relativ zu einem Fahrzeug kann somit effizient verbessert werden.

Gemäß einer vorteilhaften Ausgestaltung kann das Berechnen einer Aufenthaltswahrscheinlichkeit des mobilen Endgeräts für eine Position aus der Menge von Positionen ein Messen einer Entfernung des mobilen Endgeräts relativ zu dem Fahrzeug, und ein Ermitteln der Aufenthaltswahrscheinlichkeit des mobilen Endgeräts für die Position mittels einer nicht-linearen Wahrscheinlichkeitsdichtefunktion in Abhängigkeit der gemessenen Entfernung des mobilen Endgeräts. Hiermit kann effizient eine Aufenthaltswahrscheinlichkeit des mobilen Endgeräts für eine oder alle Positionen aus der Menge von Positionen ermittelt werden.

Gemäß einer weiteren, vorteilhaften Ausgestaltung kann das Bestimmen einer aggregierten Aufenthaltswahrscheinlichkeit des mobilen Endgeräts für eine Zone ein Ermitteln einer Anzahl von zugeordneten Positionen der Zone, ein Berechnen eines Verhältnisses aus der Anzahl von zugeordneten Positionen der vordefinierten Zone und einer Gesamtanzahl von Positionen aus der Menge von Positionen, und ein Bestimmen des berechneten Verhältnisses als die aggregierte Aufenthaltswahrscheinlichkeit des mobilen Endgeräts für die vordefinierte Zone umfassen. Hiermit kann effizient ermittelt werden, welcher Anteil an Positionen aus der Menge von Positionen in einer bestimmten Zone liegen.

Gemäß einer weiteren, vorteilhaften Ausgestaltung kann das Verfahren weiterhin ein Anpassen einer oder mehrerer Positionen aus der Menge von Positionen mittels eines Bewegungsmodells zum Erzeugen einer neuen Menge von Positionen. Das Verfahren kann ferner ein Berechnen einer Aufenthaltswahrscheinlichkeit des mobilen Endgeräts für eine Position aus der neuen Menge von Positionen, und ein Entfernen einer oder mehrere Positionen aus der neuen Menge von Positionen, deren berechnete Aufenthaltswahrscheinlichkeit eine vorgegebene, minimale Aufenthaltswahrscheinlichkeit nicht überschreitet. Die vorgegebene, minimale Aufenthaltswahrscheinlichkeit kann fahrzeug- und/oder funktionsspezifisch sein. Das Verfahren kann weiterhin ein Erzeugen von neuen Positionen, so dass eine Gesamtanzahl von Positionen der neuen Menge von Positionen mit einer Gesamtanzahl von Positionen der Menge von Positionen übereinstimmt, ein Hinzufügen der neuen Positionen zu der neuen Menge von Positionen, und ein Zuordnen einer Position aus der neuen Menge von Positionen zu einer Zone aus der Vielzahl von Zonen des Fahrzeugs umfassen. Vorzugsweise kann das Verfahren eine Teilmenge der Positionen oder alle Positionen aus der neuen Menge von Positionen einer Zone zuordnen. Das Verfahren kann ferner ein Bestimmen einer aggregierten Aufenthaltswahrscheinlichkeit des mobilen Endgeräts für eine Zone in Abhängigkeit der zugeordneten Positionen aus der neuen Menge von Positionen zu der Zone umfassen. Falls die aggregierte Aufenthaltswahrscheinlichkeit des mobilen Endgeräts für eine Zone den vorgegebenen Konfidenzwert überschreitet, kann das Verfahren die Zone als den Aufenthaltsbereich des mobilen Endgeräts ermitteln. Hiermit kann iterativ eine oder mehrere Positionen aus der Menge von Positionen an die Bewegung des mobilen Endgeräts angepasst werden, so dass eine Konvergenz des Verfahrens erreicht werden kann. Hiermit kann eine genauere Zuordnung des mobilen Endgeräts zu einer Zone effizient erreicht werden.

Gemäß einer weiteren, vorteilhaften Ausgestaltung kann das Bewegungsmodell die Positionen aus der Menge von Positionen zufällig und/oder basierend auf Bewegungssensordaten des mobilen Endgeräts anpassen, und können die neuen Positionen vorzugsweise in einem nahen Umfeld von Positionen aus der neuen Menge von Positionen erzeugt werden. Hiermit kann eine Bestimmung des Aufenthaltsbereichs des mobilen Endgeräts effizient verbessert werden.

Gemäß einer weiteren, vorteilhaften Ausgestaltung kann das Verfahren weiterhin, falls die aggregierte Aufenthaltswahrscheinlichkeit der zugeordneten Positionen einer Zone einen vorgegebenen Konfidenzwert nicht überschreitet und eine vorgegebene Anzahl an Nichtüberschreitungen des vorgegebenen Konfidenzwerts erreicht ist, ein Abbrechen des Ermittelns des Aufenthaltsbereichs des mobilen Endgeräts umfassen. Hiermit kann das Verfahren beendet werden, falls keine Zone mit dem vorgegebenen Konfidenzwert gefunden werden kann.

Gemäß einem weiteren Aspekt zeichnet sich die Erfindung aus durch ein computerlesbares Medium zum Ermitteln eines Aufenthaltsbereichs eines mobilen Endgeräts, das computerlesbare Medium umfassend Instruktionen, die, wenn ausgeführt auf einem Steuergerät oder einem Computer, das oben beschriebene Verfahren ausführen.

Gemäß einem weiteren Aspekt zeichnet sich die Erfindung aus durch ein System zum Ermitteln eines Aufenthaltsbereichs eines mobilen Endgeräts, wobei das System Mittel umfasst, das oben beschriebene Verfahren auszuführen.

Gemäß einem weiteren Aspekt zeichnet sich die Erfindung aus durch ein Fahrzeug umfassend das oben beschriebene System zum Ermitteln eines Aufenthaltsbereichs eines mobilen Endgeräts.

Weitere Merkmale der Erfindung ergeben sich aus den Ansprüchen, den Figuren und der Figurenbeschreibung. Alle vorstehend in der Beschreibung genannten Merkmale und Merkmalkombinationen sowie die nachfolgend in der Figurenbeschreibung genannten und/oder in den Figuren allein gezeigten Merkmale und Merkmalkombinationen sind nicht nur in der jeweils angegebenen Kombination, sondern auch in anderen Kombinationen oder aber in Alleinstellung verwendbar.

Im Folgenden wird anhand der beigefügten Zeichnungen ein bevorzugtes Ausführungsbeispiel der Erfindung beschrieben. Daraus ergeben sich weitere Details, bevorzugte Ausgestaltungen und Weiterbildungen der Erfindung. Im Einzelnen zeigen schematisch
**Fig. 1** ein beispielhaftes Szenario eines Verfahrens zum Ermitteln eines Aufenthaltsbereichs eines mobilen Endgeräts relativ zu einem Fahrzeug,
**Fig. 2** eine erste, beispielhafte Wahrscheinlichkeitsdichtefunktion,
**Fig. 3** eine zweite, beispielhafte Wahrscheinlichkeitsdichtefunktion, und
**Fig. 4** eine dritte, beispielhafte Wahrscheinlichkeitsdichtefunktion.

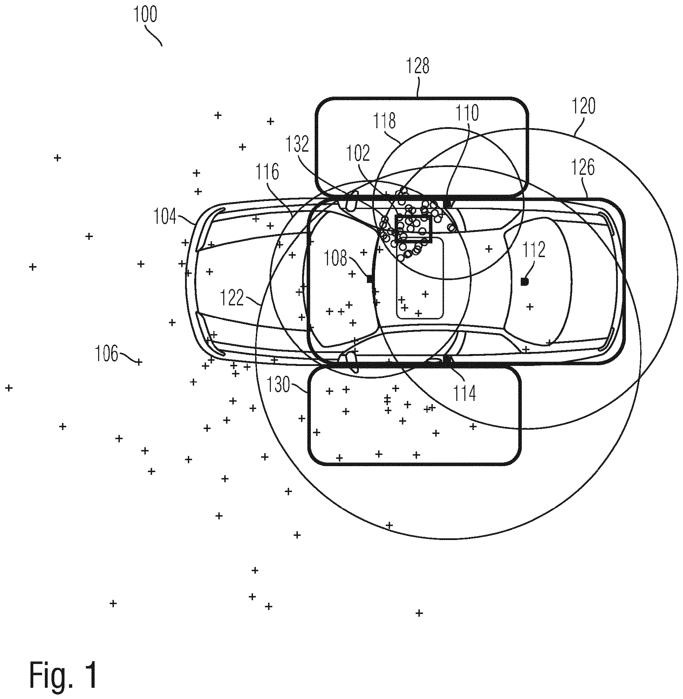

Im Detail zeigt **Fig. 1** ein beispielhaftes Szenario 100 eines Verfahrens zum Ermitteln eines Aufenthaltsbereichs eines mobilen Endgeräts 102 relativ zu einem Fahrzeug 104. Das Verfahren kann in einem Steuergerät oder einer Kombination von Steuergeräten des Fahrzeugs 104 ausgeführt werden. Ein mobiles Endgerät 102, z.B. ein Smartphone, kann dazu verwendet werden, um eine Fahrzeugfunktion auszulösen, z.B. ein Fahrzeugzugangssystem zu aktivieren bzw. zu deaktivieren oder einen Motorstart zu authentisieren. Um eine Fahrzeugfunktion auslösen zu können, ist ein Aufenthaltsbereich des mobilen Endgeräts 102 relativ zu dem Fahrzeug 104 zu ermitteln. Der Verfahren kann eine Menge von Positionen relativ zu dem Fahrzeug 104 erzeugen. Die Menge von Positionen kann initial zufällig erzeugt werden. Wie in Fig. 1 gezeigt, sind sie Position der initialen Menge von Positionen mit einem Pluszeichen markiert. Beispielhaft ist mit 106 eine Position aus der initialen Menge von Positionen referenziert.

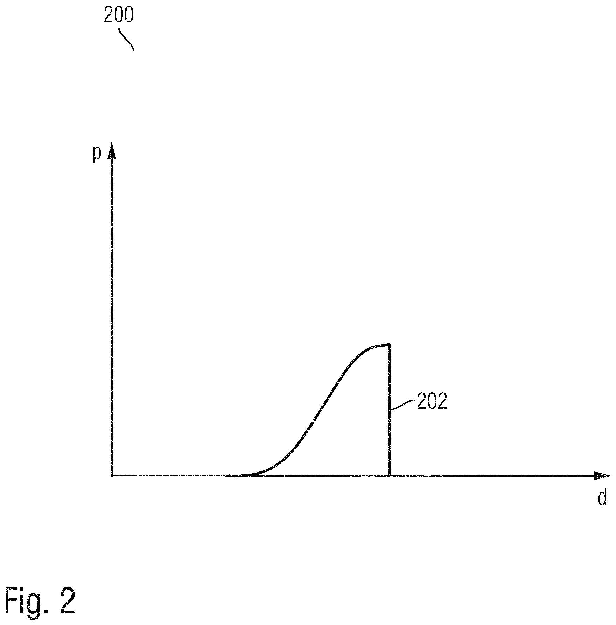

Für eine Position 106 aus der Menge von Positionen kann das Verfahren eine Aufenthaltswahrscheinlichkeit des mobilen Endgeräts 102 berechnen. Das Berechnen der Aufenthaltswahrscheinlichkeit kann ein Messen einer Entfernung des mobilen Endgeräts 102 relativ zu dem Fahrzeug 104 umfassen. Die Entfernung des mobilen Endgeräts kann relativ zu einem oder mehreren Referenzpunkten 108, 110, 112, 114 des Fahrzeugs 104 gemessen werden. Ein Referenzpunkt 108, 110, 112, 114 kann beispielsweise ein Messpunkt oder eine Antenne des Fahrzeugs 104 sein. Wie in Fig. 2 dargestellt, führt jeder Referenzpunkt 108, 110, 112, 114 eine Messung aus, um die Entfernung des mobilen Endgeräts 102 bezüglich des jeweiligen Referenzpunkts zu ermitteln. Der Referenzpunkt 108 misst die Entfernung 116, der Referenzpunkt 110 misst die Entfernung 118, der Referenzpunkt 112 misst die Entfernung 120, und der Referenzpunkt 114 misst die Entfernung 122.

Das Messen der Entfernung kann mittels einer Funktechnologie ausgeführt werden, die Timeof-Flight, kurz TOF, Messungen mit hohen Frequenzen, z.B. Frequenzen von 2,4 GHz und höher, ausführen kann. Bei einer Messung der Entfernung mit hohen Frequenzen können Reflexions-, Abschattungs-, und/oder Beugungseigenschaften auftreten, die ein Ergebnis der Entfernungsmessung beeinflussen können. Die Messung der Entfernung kann daher zwei Zustände aufweisen:
- Line-of-Sight (LOS): Die Messung der Entfernung entspricht einer kürzesten Entfernung zwischen dem mobilen Endgerät 102 und dem Fahrzeug 104, insbesondere einem Referenzpunkt 108, 110, 112, 114 des Fahrzeugs 104; oder
- None-Line-of-Sight (NLOS): Die Messung der Entfernung entspricht einer Entfernung, die länger ist als eine kürzeste Entfernung zwischen dem mobilen Endgerät 102 und dem Fahrzeug 104, insbesondere einem Referenzpunkt 108, 110, 112, 114 des Fahrzeugs 104.

Bei einer Messung der Entfernung des mobilen Endgeräts 102 von dem Fahrzeug 104 ist häufig nicht bekannt, ob die Messung der Entfernung eine LOS-Messung ist oder eine NLOS-Messung ist. Eine Messung der Entfernung mittels einer TOF-Funktechnik kann dazu führen, dass eine tatsächliche Entfernung des mobilen Endgeräts 102 von dem Fahrzeug 104 kürzer sein kann als die gemessene Entfernung, z.B. bei einer NLOS-Messung, jedoch nicht länger sein kann als die gemessene Entfernung, z.B. bei einer LOS-Messung.

Um eine Aufenthaltswahrscheinlichkeit des mobilen Endgeräts 102 für eine Position aus der Menge von Positionen zu bestimmen, kann eine nicht-lineare, insbesondere eine nichtgausssche, Wahrscheinlichkeitsdichtefunktion in Abhängigkeit der gemessenen Entfernung des mobilen Endgeräts 102 verwendet werden. Vorzugsweise wird jede Position aus der Menge von Positionen mittels einer Wahrscheinlichkeitsdichtefunktion bewertet, um eine Aufenthaltswahrscheinlichkeit des mobilen Endgeräts 102 für eine Position zu ermitteln.

Die Aufenthaltswahrscheinlichkeitsdichtefunktion kann einheitlich oder unterschiedliche für jede der gemessenen Entfernungen des mobilen Endgeräts 102 sein. Im Szenario von Fig. 1 werden vier Entfernungen 116, 118, 120, und 120 gemessen. Für jede der gemessenen Entfernungen kann somit eine einheitliche oder unterschiedliche Wahrscheinlichkeitsdichtefunktion verwendet werden, um eine Aufenthaltswahrscheinlichkeit einer Position aus der Menge von Positionen bezüglich der jeweiligen gemessenen Entfernung zu bestimmen. Für eine Position 124 aus der Menge von Positionen können beispielsweise Aufenthaltswahrscheinlichkeiten bezüglich der gemessenen Entfernungen 116, 118, 120, und 122 bestimmt werden.

Das Verfahren kann ferner einer Position aus der Menge von Positionen zu einer Zone 126, 128, 130 aus einer Vielzahl von Zonen 126, 128, 130 des Fahrzeugs 104 zuordnen. Das Fahrzeug 104 aus Fig. 1 hat drei beispielhafte Zonen: einen Innenraumzone 126, eine Zone 128 auf der rechten Seite des Fahrzeugs 104, und eine Zone 130 auf der linken Seite des Fahrzeugs 104. Die Zonen 126, 128, 130 des Fahrzeugs 104 können vordefiniert sein. Beispielsweise können die Zonen 126, 128, 130 des Fahrzeugs 104 relativ zu den Referenzpunkten 108, 110, 112, und 114 des Fahrzeugs 104 definiert sein. Die Zonen 126, 128, 130 können zweidimensional oder dreidimensional definiert.

Eine Position 124 kann einer Zone 126, 128, 130 des Fahrzeugs 104 zugeordnet werden, indem geprüft wird, ob die Position 124 innerhalb der Zone 126, 128, 130 liegt. Liegt eine Position 124 innerhalb der Zone 126, wird die Position 124 der Zone 126 zugeordnet. Vorzugsweise werden alle Positionen entweder keiner Zone zugeordnet, wenn beispielsweise an der Position, z.B. an Position 106, keine Zone definiert ist, oder genau der Zone zugeordnet, die an der Position, z.B. an Position 124, definiert ist. Abhängig von einer Fahrzeugfunktion können mehr oder weniger Zonen 126, 128, 130 definiert sein, Abmessungen der Zonen 126, 128, 130 variieren, und/oder Grenzen zwischen den Zonen 126, 128, 130 unterschiedlich sein.

Zu einer Zone 126, 128, 130 zugeordnete Positionen können verwendet werden, um eine aggregierte Aufenthaltswahrscheinlichkeit des mobilen Endgeräts 102 für diese Zone 126, 128, 130 zu bestimmen. Die aggregierte Aufenthaltswahrscheinlichkeit kann definiert werden als eine Aufenthaltswahrscheinlichkeit des mobilen Endgeräts basierend auf einer bestimmten Anzahl oder aller einer Zone zugeordneten Positionen. Für das Bestimmen der aggregierten Aufenthaltswahrscheinlichkeit kann eine Anzahl der zu dieser Zone zugeordneten Positionen ermittelt werden und durch die Gesamtanzahl der Positionen aus der Menge von Positionen geteilt werden, um ein Verhältnis der zu dieser Zone zugeordneten Positionen bezüglich der Gesamtanzahl von Positionen zu erhalten. Dieses Verhältnis entspricht der aggregierten Aufenthaltswahrscheinlichkeit des mobilen Endgeräts. Vorteilhafterweise kann durch das Bestimmen des oben beschriebenen Verhältnisses die aggregierte Aufenthaltswahrscheinlichkeit des mobilen Endgeräts 102 ermittelt werden. Ist die Gesamtanzahl der Positionen beispielsweise 100 Positionen und befinden sich 90 Positionen innerhalb einer bestimmten Zone, sind 90 Prozent der Positionen innerhalb dieser Zone. Wenn 90 Prozent der Positionen innerhalb einer bestimmten Zone sind, ist die aggregierte Aufenthaltswahrscheinlichkeit bei 90 Prozent. Das mobile Endgerät 102 befindet sich folglich mit einer aggregierten Aufenthaltswahrscheinlichkeit von 90 Prozent innerhalb dieser Zone.

Falls die aggregierte Aufenthaltswahrscheinlichkeit des mobilen Endgeräts 102 für eine Zone 126, 128, 130 aus der Vielzahl von Zonen 126, 128, 130 einen vorgegebenen Konfidenzwert überschreitet, kann das Verfahren die Zone 126, 128, 130 als den Aufenthaltsbereich des mobilen Endgeräts 102 ermitteln. Der vorgegebene Konfidenzwert kann in Abhängigkeit einer Fahrzeugfunktion definiert werden. Beispielsweise können kritische Fahrzeugfunktionen wie beispielsweise das Starten eines Motors oder das Freigeben eines Fahrzeugzugangs eine hohe Konfidenz bzw. einen hohen Konfidenzwert erfordern. Weniger kritische Fahrzeugfunktionen wie beispielsweise ein Einstellen eines Sitzes oder ein Personalisieren eines Infotainmentsystems können einen niedrigeren, vorgegebenen Konfidenzwert erfordern.

Durch ein Vergleichen der aggregierten Aufenthaltswahrscheinlichkeit mit einem vorgegebenen Konfidenzwert können durch das Verfahren verschiedene Entscheidungen getroffen werden. Falls die aggregierte Aufenthaltswahrscheinlichkeit gleich dem vorgegebenen Konfidenzwert ist oder den vorgegebenen Konfidenzwert überschreitet, ist die Zuordnung des mobilen Endgeräts 102 zu dieser Zone gültig. Die Zone stellt folglich den Aufenthaltsbereich des mobilen Endgeräts 102 dar. Falls die aggregierte Aufenthaltswahrscheinlichkeit nicht dem vorgegebenen Konfidenzwert gleicht oder den vorgegebenen Konfidenzwert überschreitet, kann der Aufenthaltsbereich des mobilen Endgeräts 102 nicht entschieden werden. Das Verfahren kann jedoch iterativ ausgeführt werden, um auf Basis einer zumindest teilweise neuen Menge an Positionen den Aufenthaltsbereich des mobilen Endgeräts zu bestimmen. Eine Anzahl der Iterationen des Verfahrens kann vorgegeben sein. Falls die aggregierte Aufenthaltswahrscheinlichkeit nicht dem vorgegebenen Konfidenzwert gleicht oder den vorgegebenen Konfidenzwert überschreitet und eine vorgegebene maximale Anzahl an Iterationen überschritten ist, kann das Verfahren das Ermitteln des Aufenthaltsbereichs des mobilen Endgeräts abbrechen. Eine Entscheidung über den Aufenthaltsbereich des mobilen Endgeräts 102 für eine Zone mit dem vorgegebenen Konfidenzwert kann durch das Verfahren nicht herbeigeführt werden. Die zugeordneten Positionen zu einer Zone sind nicht gültig. Eine Zone für das mobile Endgerät 102 kann nicht ermittelt werden.

Im Folgenden wird ein iteratives Ausführen des Verfahrens beschrieben. Das Verfahren wurde bereits, wie oben beschrieben, initial ausgeführt. Bei dem initialen Ausführen des Verfahrens konnte jedoch keine aggregierte Aufenthaltswahrscheinlichkeit des mobilen Endgeräts 102 ermittelt werden, die dem vorgegebenen Konfidenzwert gleicht oder den vorgegebenen Konfidenzwert überschreitet. Folglich konnte auch keine gültige Zone für das mobile Endgerät ermittelt werden.

Im Detail kann das Verfahren Positionen aus der initialen Menge von Positionen auswählen und/oder verändern und diese Positionen als Basis für das weitere Verfahren bei einer iterativen Ausführung des Verfahrens verwenden.

Eine Teilemenge oder alle Positionen aus der Menge von Positionen können mittels eines Bewegungsmodells angepasst werden, um eine neue Menge von Positionen zu erzeugen. Beispielsweise kann die Teilmenge der Positionen aus der Menge von Positionen ermittelt werden, indem Positionen aus der Menge von Positionen bestimmt werden, die mindestens eine vorgegebene, minimale Aufenthaltswahrscheinlichkeit aufweisen. Positionen aus der Menge von Positionen, die die vorgegebene, minimale Aufenthaltswahrscheinlichkeit nicht überschreiten, können nicht weiter betrachtet werden. Beispielsweise können die Positionen aus der Menge von Positionen, die die vorgegebene, minimale Aufenthaltswahrscheinlichkeit nicht überschreiten, aus der Menge von Positionen entfernt werden. Durch das Anpassen der Positionen durch das Bewegungsmodells kann eine Bewegung des mobilen Endgeräts 102 abgebildet werden. Das Bewegungsmodell für die Positionen kann frei gewählt werden. Allgemein wird eine Position durch das Bewegungsmodell um eine zufällige, abzuschätzende, und/oder gemessene Bewegung angepasst. Beispielsweise kann das Bewegungsmodell ein stochastisches Bewegungsmodell sein. Beispielsweis kann das Bewegungsmodell die Position ohne Berücksichtigung eines Zustands einer Bewegungsrichtung unter Verwendung einer Zufallszahl anpassen, um einen Rechenaufwand für das Anpassen der Positionen zu reduzieren. Nach dem Anpassen der Positionen, kann anhand der Entfernung der Position zu einem oder mehreren Referenzpunkten, und der zugehörigen Wahrscheinlichkeitsdichtefunktion für vorzugsweise jede Position eine Aufenthaltswahrscheinlichkeit, insbesondere eine aktuelle Aufenthaltswahrscheinlichkeit, berechnet werden. Positionen mit geringer Aufenthaltswahrscheinlichkeit können aus der neuen Menge von Positionen entfernt werden. Ferner können die angepassten Positionen zu einer neuen Menge von Positionen hinzugefügt werden.

Ferner kann das Verfahren eine oder mehrere neue Positionen erzeugen, so dass eine Gesamtanzahl von Positionen der neuen Menge von Positionen und eine Gesamtanzahl von Positionen der Menge von Positionen übereinstimmen. Das Verfahren kann somit auch bei jeder Iteration des Verfahrens auf die gleiche Anzahl von Positionen anwenden. Vorzugsweise können die neuen Positionen in einem nahen Umfeld der angepassten Positionen erzeugt werden. Dies kann eine Konvergenz des Verfahrens erhöhen. Die neuen Positionen können ebenfalls zu der neuen Menge von Positionen hinzugefügt werden. Die neue Menge von Positionen umfasst somit die gleiche Anzahl an Positionen wie die initialen Menge von Positionen.

Die weiteren Schritte der iterativen Ausführung entsprechen den Schritten der initialen Ausführung des Verfahrens. Im Detail wird eine Aufenthaltswahrscheinlichkeit des mobilen Endgeräts für eine Position aus der neuen Menge von Positionen berechnet, eine Position aus der neuen Menge von Positionen zu einer Zone aus der Vielzahl von Zonen des Fahrzeugs zugeordnet und eine aggregierten Aufenthaltswahrscheinlichkeit des mobilen Endgeräts für eine Zone in Abhängigkeit der zugeordneten Positionen aus der neuen Menge von Positionen zu der Zone berechnet. Falls die aggregierte Aufenthaltswahrscheinlichkeit des mobilen Endgeräts für eine Zone den vorgegebenen Konfidenzwert überschreitet, wird die Zone als den Aufenthaltsbereich des mobilen Endgeräts ermittelt. Andernfalls kann das Verfahren erneut iterativ ausgeführt werden bis eine Zone mit dem benötigten Konfidenzwert ermittelt oder die maximale Anzahl von Iterationen erreicht werden. In Fig. 1 sind mit einem Kreissymbol die Positionen markiert, die einen Aufenthaltsbereich des mobilen Endgeräts nach einem oder mehreren iterativen Ausführen des Verfahrens repräsentieren. Eine beispielhafte Position ist 132 bezeichnet. Die mit dem Kreissymbol gekennzeichneten Positionen liegen mehrheitlich in der Innenraumzone 126. Folglich erfüllen die mit Kreissymbol gekennzeichneten Positionen den vorgegebenen Konfidenzwert. Die ermittelte Zone des mobilen Endgeräts 102 ist somit die Innenraumzone 126 des Fahrzeugs 104.

Fig. 2, 3, und 4 zeigen beispielhafte Wahrscheinlichkeitsdichtefunktionen zum Bestimmen einer Aufenthaltswahrscheinlichkeit des mobilen Endgeräts für eine Position aus der Menge von Positionen. Im Detail zeigt Fig. 2 eine beispielhafte Wahrscheinlichkeitsdichtfunktion für einen Fall, bei dem nicht bekannt ist, ob die Messung der Entfernung eine LOS- oder eine NLOS-Messung ist. In Fig. 2 ist die gemessene Entfernung des mobilen Endgeräts 102 mit 202 bezeichnet. Die Aufenthaltswahrscheinlichkeit des mobilen Endgeräts 102 ist bei einer Position, die nahe an der gemessenen Entfernung des mobilen Endgeräts 102 liegt, am höchsten und nimmt mit zunehmender Entfernung der Position von der gemessenen Entfernung ab. Eine Position, die weiter als die gemessene Entfernung des mobilen Endgeräts 102 entfernt liegt, hat die Aufenthaltswahrscheinlichkeit 0.

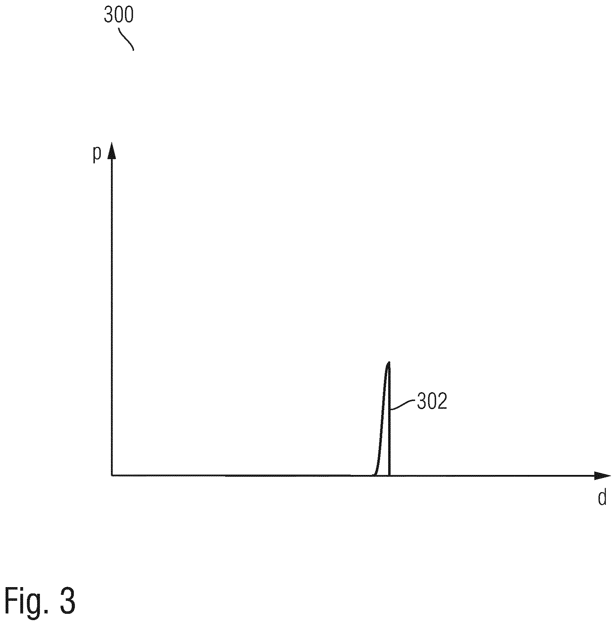

Im Detail zeigt Fig. 3 eine Wahrscheinlichkeitsdichtefunktion für einen Fall, bei dem bekannt ist, dass die Messung der Entfernung eine LOS-Messung ist. In Fig. 3 ist die gemessene Entfernung des mobilen Endgeräts 102 mit 302 bezeichnet. Die Aufenthaltswahrscheinlichkeit des mobilen Endgeräts 102 ist bei einer Position, die nahe an der gemessenen Entfernung liegt, am höchsten und nimmt mit zunehmender Entfernung der Position von der gemessenen Entfernung schnell ab. Eine Position, die weiter als die gemessene Entfernung des mobilen Endgeräts entfernt liegt, hat die Aufenthaltswahrscheinlichkeit 0.

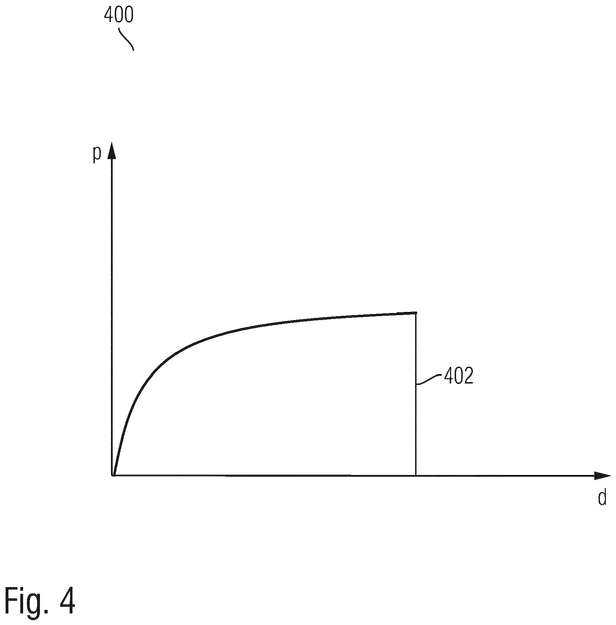

Im Detail zeigt Fig. 4 eine Wahrscheinlichkeitsdichtefunktion für einen Fall, bei dem bekannt ist, dass die Messung der Entfernung eine NLOS-Messung ist. In Fig. 4 ist die gemessene Entfernung des mobilen Endgeräts 102 mit 402 bezeichnet. Die Aufenthaltswahrscheinlichkeit des mobilen Endgeräts 102 ist bei einer Position, die nahe an der gemessenen Entfernung liegt am höchsten und nimmt mit zunehmender Entfernung der Position von der gemessenen Entfernung nur langsam ab. Auch weiter entfernte Positionen erhalten dadurch eine hohe Aufenthaltswahrscheinlichkeit zugewiesen. Die gemessene Entfernung beeinflusst nur wenig die Aufenthaltswahrscheinlichkeit einer Position. Eine Position, die weiter als die gemessene Entfernung des mobilen Endgeräts 102 entfernt liegt, hat die Aufenthaltswahrscheinlichkeit 0.

Vorteilhafterweise kann das oben beschriebene Verfahren einen Aufenthaltsbereich eines mobilen Endgeräts ohne Wissen über einen Fehler der gemessenen Entfernung des mobilen Endgeräts genau ermittelt werden. Ferner kann ermittelt werden, ob das Verfahren konvergiert und damit eine gültige Zone ermittelt werden kann oder ob das Verfahren nicht konvergiert und keine gültige Zone ermittelt werden kann. Das Verfahren kann somit nicht entscheidbare Situationen effizient erkennen. Die Positionsbestimmung eines mobilen Endgeräts kann somit korrekt relativ zu dem Fahrzeug bezüglich einer Zone präzise ermittelt werden. Aufenthaltsbereiche des mobilen Endgeräts können effizient auf Zonen abgebildet werden, und schnell eine Zuordnung zu einer Zone ermittelt werden.

### Bezugszeichenliste

- 100: Szenario
- 102: mobiles Endgerät
- 104: Fahrzeug
- 106: Position aus der initialen Menge von Positionen
- 108: Referenzpunkt
- 110: Referenzpunkt
- 112: Referenzpunkt
- 114: Referenzpunkt
- 116: gemessene Entfernung
- 118: gemessene Entfernung
- 120: gemessene Entfernung
- 122: gemessene Entfernung
- 124: Position aus der initialen Menge von Positionen
- 126: Zone
- 128: Zone
- 130: Zone
- 132: Position aus der neuen Menge von Positionen
- 200: Wahrscheinlichkeitsdichtefunktion
- 202: gemessene Entfernung
- 300: Wahrscheinlichkeitsdichtefunktion
- 302: gemessene Entfernung
- 400: Wahrscheinlichkeitsdichtefunktion
- 402: gemessene Entfernung

## Patentansprüche

1. Verfahren zum Ermitteln eines Aufenthaltsbereichs eines mobilen Endgeräts (102) relativ zu einem Fahrzeug (104), das Verfahren umfassend:
Erzeugen einer Menge von Positionen relativ zu einem oder mehreren Referenzpunkten des Fahrzeugs (104);
Berechnen einer Aufenthaltswahrscheinlichkeit des mobilen Endgeräts (102) für eine Position aus der Menge von Positionen, wobei das Berechnen einer Aufenthaltswahrscheinlichkeit des mobilen Endgeräts für die Position aus der Menge von Positionen umfasst:
Messen einer Entfernung des mobilen Endgeräts relativ zu den einen oder mehreren Referenzpunkten des Fahrzeugs; und
Ermitteln der Aufenthaltswahrscheinlichkeit des mobilen Endgeräts für die Position mittels einer nicht-linearen Wahrscheinlichkeitsdichtefunktion in Abhängigkeit der gemessenen Entfernung des mobilen Endgeräts;
Zuordnen einer Position aus der Menge von Positionen zu einer Zone aus einer Vielzahl von Zonen des Fahrzeugs (104);
Bestimmen einer aggregierten Aufenthaltswahrscheinlichkeit des mobilen Endgeräts (102) für eine Zone aus der Vielzahl von Zonen in Abhängigkeit der zugeordneten Positionen zu der Zone (126, 128, 130), wobei das Bestimmen einer aggregierten Aufenthaltswahrscheinlichkeit des mobilen Endgeräts für eine Zone umfasst:
Ermitteln einer Anzahl von zugeordneten Positionen der Zone;
Berechnen eines Verhältnisses aus der Anzahl von zugeordneten Positionen der vordefinierten Zone und einer Gesamtanzahl von Positionen aus der Menge von Positionen; und
Bestimmen des berechneten Verhältnisses als die aggregierte Aufenthaltswahrscheinlichkeit des mobilen Endgeräts für die vordefinierte Zone; und
Falls die aggregierte Aufenthaltswahrscheinlichkeit des mobilen Endgeräts (102) für eine Zone (126, 128, 130) aus der Vielzahl von Zonen (126, 128, 130) einen vorgegebenen Konfidenzwert überschreitet:
Ermitteln der Zone (126, 128, 130) als den Aufenthaltsbereich des mobilen Endgeräts (102).

2. Verfahren nach Anspruch 1, das Verfahren weiterhin umfassend:
Anpassen einer oder mehrerer Positionen aus der Menge von Positionen mittels eines Bewegungsmodells zum Erzeugen einer neuen Menge von Positionen;
Berechnen einer Aufenthaltswahrscheinlichkeit des mobilen Endgeräts für eine Position aus der neuen Menge von Positionen;
Erzeugen von neuen Positionen, so dass eine Gesamtanzahl von Positionen der neuen Menge von Positionen mit einer Gesamtanzahl von Positionen der Menge von Positionen übereinstimmt;
Hinzufügen der neuen Positionen zu der neuen Menge von Positionen;
Zuordnen einer Position aus der neuen Menge von Positionen zu einer Zone aus der Vielzahl von Zonen des Fahrzeugs;
Bestimmen einer aggregierten Aufenthaltswahrscheinlichkeit des mobilen Endgeräts für eine Zone in Abhängigkeit der zugeordneten Positionen aus der neuen Menge von Positionen zu der Zone;
Falls die aggregierte Aufenthaltswahrscheinlichkeit des mobilen Endgeräts für eine Zone den vorgegebenen Konfidenzwert überschreitet:
Ermitteln der Zone als den Aufenthaltsbereich des mobilen Endgeräts.

3. Verfahren nach Anspruch 2, wobei das Bewegungsmodell die Positionen aus der Menge von Positionen zufällig und/oder basierend auf Bewegungssensordaten des mobilen Endgeräts anpasst; und
wobei die neuen Positionen vorzugsweise in einem nahen Umfeld von Positionen aus der neuen Menge von Positionen erzeugt werden.

4. Verfahren nach einem der vorhergehenden Ansprüche, das Verfahren weiterhin umfassend:
Falls die aggregierte Aufenthaltswahrscheinlichkeit der zugeordneten Positionen einer Zone einen vorgegebenen Konfidenzwert nicht überschreitet und eine vorgegebene Anzahl an Nichtüberschreitungen des vorgegebenen Konfidenzwerts erreicht ist,
Abbrechen des Ermittelns des Aufenthaltsbereichs des mobilen Endgeräts.

5. Computerlesbares Medium zum Ermitteln eines Aufenthaltsbereichs eines mobilen Endgeräts, das computerlesbare Medium umfassend Instruktionen, die, wenn ausgeführt auf einem Steuergerät oder einem Computer, das Verfahren nach einem der Ansprüche 1 bis 4 ausführen.

6. System zum Ermitteln eines Aufenthaltsbereichs eines mobilen Endgeräts, wobei das System Mittel umfasst, das Verfahren nach einem der Ansprüche 1 bis 4 auszuführen.

7. Fahrzeug umfassend das System zum Ermitteln eines Aufenthaltsbereichs eines mobilen Endgeräts nach Anspruch 6.

## Claims

1. Method for ascertaining a location area of a mobile terminal (102) in relation to a vehicle (104), the method comprising:
generating a set of positions in relation to one or more reference points of the vehicle (104);
calculating a location probability of the mobile terminal (102) for one position from the set of positions, wherein calculating a location probability of the mobile terminal for the position from the set of positions comprises:
measuring a distance of the mobile terminal in relation to the one or more reference points of the vehicle; and
ascertaining the location probability of the mobile terminal for the position by way of a nonlinear probability density function depending on the measured distance of the mobile terminal;
assigning one position from the set of positions to one zone from a multiplicity of zones of the vehicle (104) ;
determining an aggregated location probability of the mobile terminal (102) for one zone from the multiplicity of zones depending on the positions assigned to the zone (126, 128, 130), wherein determining an aggregated location probability of the mobile terminal for one zone comprises:
ascertaining a number of assigned positions of the zone;
calculating a ratio from the number of assigned positions of the predefined zone and an overall number of positions from the set of positions; and
determining the calculated ratio as the aggregated location probability of the mobile terminal for the predefined zone; and
if the aggregated location probability of the mobile terminal (102) for one zone (126, 128, 130) from the multiplicity of zones (126, 128, 130) exceeds a predefined confidence value:
ascertaining the zone (126, 128, 130) as the location area of the mobile terminal (102).

2. Method according to Claim 1, the method furthermore comprising:
adjusting one or more positions from the set of positions by way of a movement model in order to generate a new set of positions;
calculating a location probability of the mobile terminal for one position from the new set of positions;
generating new positions, such that an overall number of positions of the new set of positions matches an overall number of positions of the set of positions;
adding the new positions to the new set of positions;
assigning one position from the new set of positions to one zone from the multiplicity of zones of the vehicle;
determining an aggregated location probability of the mobile terminal for a zone depending on the positions assigned from the new set of positions to the zone;
if the aggregated location probability of the mobile terminal for a zone exceeds the predefined confidence value:
ascertaining the zone as the location area of the mobile terminal.

3. Method according to Claim 2, wherein the movement model adjusts the positions from the set of positions randomly and/or on the basis of movement sensor data of the mobile terminal; and
wherein the new positions are preferably generated in close surroundings of positions from the new set of positions.

4. Method according to one of the preceding claims, the method furthermore comprising:
if the aggregated location probability of the assigned positions of a zone does not exceed a predefined confidence value and a predefined number of non-exceedances of the predefined confidence value is reached,
stopping the ascertainment of the location area of the mobile terminal.

5. Computer-readable medium for ascertaining a location area of a mobile terminal, the computer-readable medium comprising instructions that execute the method according to one of Claims 1 to 4 when they are executed on a controller or a computer.

6. System for ascertaining a location area of a mobile terminal, wherein the system comprises means for executing the method according to one of Claims 1 to 4.

7. Vehicle comprising the system for ascertaining a location area of a mobile terminal according to Claim 6.

## Revendications

1. Procédé permettant de déterminer une région où se trouve un terminal mobile (102) par rapport à un véhicule (104), le procédé comprenant :
la génération d'un ensemble de positions par rapport à un ou plusieurs points de référence du véhicule (104) ;
le calcul d'une probabilité que le terminal mobile (102) se trouve à une position parmi l'ensemble de positions, dans lequel le calcul d'une probabilité que le terminal mobile se trouve à la position parmi l'ensemble de positions comprend :
la mesure d'une distance du terminal mobile par rapport à un ou plusieurs points de référence du véhicule ; et la détermination de la probabilité que le terminal mobile se trouve à ladite position au moyen d'une fonction de densité de probabilité non linéaire en fonction de la distance mesurée du terminal mobile ;
l'association d'une position parmi l'ensemble de positions à une zone parmi une pluralité de zones du véhicule (104) ;
la détermination d'une probabilité agrégée que le terminal mobile (102) se trouve dans une zone parmi la pluralité de zones en fonction des positions associées par rapport à la zone (126, 128, 130), dans lequel la détermination d'une probabilité agrégée que le terminal mobile se trouve dans une zone comprend :
la détermination d'un nombre de positions associées de la zone ;
la calcul d'un rapport entre le nombre de positions associées de la zone prédéfinie et un nombre total de positions parmi l'ensemble de positions ; et
la détermination du rapport calculé comme étant la probabilité agrégée que le terminal mobile se trouve dans la zone prédéfinie ; et
dans le cas où la probabilité agrégée que le terminal mobile (102) se trouve dans une zone (126, 128, 130) parmi la pluralité de zones (126, 128, 130) dépasse une valeur de confiance prédéterminée :
la détermination de la zone (126, 128, 130) comme étant la zone où se trouve le terminal mobile (102).

2. Procédé selon la revendication 1, lequel procédé comprenant en outre :
l'ajustement d'une ou de plusieurs positions parmi l'ensemble de positions au moyen d'un modèle de mouvement pour générer un nouvel ensemble de positions ;
le calcul d'une probabilité que le terminal mobile se trouve à une position parmi le nouvel ensemble de positions ;
la génération de nouvelles positions de manière à ce qu'un nombre total de positions du nouvel ensemble de positions corresponde à un nombre total de positions parmi l'ensemble de positions ;
l'ajout des nouvelles positions au nouvel ensemble de positions ;
l'association d'une position parmi le nouvel ensemble de positions à une zone parmi la pluralité de zones du véhicule ;
la détermination d'une probabilité agrégée que le terminal mobile se trouve dans une zone en fonction des positions associées parmi le nouvel ensemble de positions par rapport à la zone ;
dans le cas où la probabilité agrégée que le terminal mobile se trouve dans une zone dépasse la valeur de confiance prédéterminée :
la détermination de la zone comme étant la région où se trouve le terminal mobile.

3. Procédé selon la revendication 2, dans lequel le modèle de mouvement ajuste aléatoirement et/ou sur la base de données de capteurs de mouvement du terminal mobile les positions parmi l'ensemble de positions ; et dans lequel les nouvelles positions sont de préférence générées dans un environnement proche de positions du nouvel ensemble de positions.

4. Procédé selon l'une des revendications précédentes, lequel procédé comprend en outre :
dans le cas où la probabilité agrégée que les positions associées d'une zone ne dépassent pas une valeur de confiance prédéterminée et où un nombre prédéterminé de non-dépassements de la valeur de confiance prédéterminée n'est pas atteint,
l'interruption de la détermination de la région où se trouve le terminal mobile.

5. Support lisible par ordinateur permettant de déterminer une région où se trouve un terminal mobile, le support lisible par ordinateur comprenant des instructions qui, lorsqu'elles sont exécutées sur un appareil de commande ou un ordinateur, mettent en œuvre le procédé selon l'une des revendications 1 à 4.

6. Système permettant de déterminer une région où se trouve un terminal mobile, dans lequel le système comprend des moyens permettant de mettre en œuvre le procédé selon l'une des revendications 1 à 4.

7. Véhicule comprenant le système permettant de déterminer la région où se trouve un terminal mobile selon la revendication 6.
